# EUROPÄISCHE PATENTANMELDUNG

(11) **EP 1 027 826 A1**
(43) Veröffentlichungstag der Anmeldung: **16.08.2000**
(21) Anmeldenummer: 00102599.8
(22) Anmeldetag: 08.02.2000
(51) Int. Cl.: A01K 89/016, A01K 89/033

(54) **Fischerrolle, insbesondere Fliegenrolle**

(30) Priorität: 09.02.1999 CH 23999
(71) Anmelder: Etter, Hugo, 8492 Wila ZH (CH)
(72) Erfinder: Kägi, René, 8712 Stäfa (CH)
(74) Vertreter: Petschner, Goetz

(57) **Zusammenfassung**

Die Fischerrolle, insbesondere Fliegenrolle, umfasst ein an einer Fischerrute befestigbares Gehäuse (1), auf dessen zentrischer Drehachse (2) eine drehbare, mit einer Handkurbel antreibbare Schnurspule (3) aufsitzt. An dieser Schnurspule sind in deren einen Drehrichtung Freilaufmittel (4) und in deren anderen Drehrichtung bremsend wirksame Magnetmittel (5,6) wirksam. sind. Letztere umfassen eine magnetische Bremsscheibe (6) an der Schnurspule (3) mit einer dem Gehäuse zugewandten Bremsfläche, die mit einem innenstirnseitig am Gehäuse angeordneten Magnetkranz mit einer Mehrzahl in Umfangsrichtung angeordnete Permanentmagnete (5) zusammenwirkt. Um dabei den axialen Abstand zwischen Permanentmagnete und Bremsscheibe zur Regelung der Bremskraft verstellen zu können, ist die Bremsscheibe (6) axial über eine zur Drehachse (2) des Gehäuses (1) koaxiale Stellschraube (7) verstellbar, wobei an der Stellschraube (7) drehfest ein aussenstirnseitig am Gehäuse (1) angeordneter Verstelldrehgriff (8) angreift.

## Beschreibung

Die vorliegende Erfindung betrifft eine Fischerrolle, insbesondere Fliegenrolle, mit einem, mittels Adapter an einer Fischerrute befestigbaren Gehäuse, auf dessen zentrischer Drehachse eine drehbare, mit einer Handkurbel antreibbare Schnurspule aufsitzt, an welcher in deren einen Drehrichtung Freilaufmittel und in deren anderen Drehrichtung bremsend wirksame Magnetmittel wirksam sind, die eine magnetische Bremsscheibe an der Schnurspule umfassen mit einer dem Gehäuse zugewandten Bremsfläche, die mit einem innenstirnseitig am Gehäuse angeordneten Magnetkranz mit einer Mehrzahl in Umfangsrichtung angeordnete Permanentmagnete zusammenwirkt, wobei der axiale Abstand zwischen Permanentmagnete und Bremsscheibe zur Regelung der Bremskraft verstellbar ist.

Fischerrollen der vorgenannten Art sind allgemein bekannt.

Ein wesentliches Problem beim Fliegenfischen mit der Fliegenrute besteht allerdings darin, dass die frei und ungebremst umlaufende Schnurlaufrolle der Technik des Fliegenfischens entsprechend mehr oder weniger gebremst werden muss. Hierfür ist durch die DE-PS 36 43 514 bereits ein Verstellsystem bekannt geworden, um den axialen Abstand zwischen Permanentmagnete und Bremsscheibe zur Regelung der Bremskraft verstellen zu können. Dieses Verstellsystem ist jedoch sehr kompliziert aufgebaut unter Verwendung von Zahnradgetriebemittel, welche über ein Steiggewinde an einem die Magnete tragenden Zahnkranz angreifen. Wird hier zudem die Schnurspule vom Gehäuse abgezogen, etwa zum Spulenwechsel o.dgl., können die dann freiliegenden Magnete und insbesondere dieGetriebemittel verschmutzen und dadurch unbrauchbar werden.

Es ist deshalb Aufgabe der vorliegenden Erfindung, einer Fischerrolle der vorgenannten Art ein Verstellsystem zuzuordnen, das mit einfachsten und wartungsfreien Mitteln erlaubt, den axialen Abstand zwischen den Permanentmagneten und der Bremsscheibe zur Regelung der Bremskraft zu verstellen.

Dies wird erfindungsgemäss zunächst dadurch erreicht, dass die Bremsscheibe axial über eine zur Drehachse des Gehäuses koaxiale Stellschraube verstellbar ist, wobei an der Stellschraube drehfest ein aussenstirnseitig am Gehäuse angeordneter Verstelldrehgriff angreift.

Hierbei kann bei einer bevorzugten Ausführungsform der Verstelldrehgriff eine Aussennabe am Gehäuse umgreifen und an dieser umfangsseitig über einen dichtenden und eine Bremswirkung ausübenden O-Ring abgestützt und relativ zur Aussennabe verdrehbar sein.

Ferner kann der Verstelldrehgriff innenseitig eine drehbegrenzende Kulisse aufweisen, die mit einem Anschlagstift an der Aussennabe am Gehäuse zusammenwirkt.

Damit ist nicht nur eine absolute Dichtheit der Verstellmittel auch bei abgezogener Schnurspule gewährleistet, sondern auch eine Regelung des axialen Abstandes zwischen den Permanentmagneten und der Bremsscheibe zur Regelung der Bremskraft zwischen einem Minimum und einem Maximum möglich. Der O-Ring setzt dabei einem unabsichtlichen Verdrehen des Verstellgriffes relativ zum Gehäuse genügend Widerstand entgegen.

Um eine zusätzliche Bremskraft an der Schnurspule von Hand aufbringen zu können, ist weiter erfindungsgemäss vorgesehen, dass das Gehäuse mindestens einen stegförmigen, zur Drehachse parallelen Mantelabschnitt, vorzugsweise wenigstens zwei stegförmige Mantelabschnitte umfasst, die mit ihren freien Endabschnitten in einer inneren Ringnut am Aussenflansch der Schnurspule geführt sind. Durch Fingerdruck auf einen der stegförmigen Mantelabschnitte wird dann durch geringe Deformation der betreffende Endabschnitt gegen die Wandung der Ringnut gedrückt und so auf die Schnurspule eine Bremskraft ausgeübt.

Weiter ist es vorteilhaft, wenn der innenstirnseitig am Gehäuse angeordnete Magnetkranz mit einer Mehrzahl in Umfangsrichtung angeordnete Permanentmagnete wenigstens bremsscheibenseitig schmutzdicht mit einer Abdeckung versehen ist.

Eine beispielsweise Ausführungsform des Erfindungsgegenstandes ist nachfolgend anhand der Zeichnung näher erläutert. Es zeigen:
- Fig. 1: in Schnitt - Darstellung eine erfindungsgemäss aufgebaute Fischer-rolle;
- Fig. 2: eine Stirnansicht der Fischerrolle gemäss Fig. 1;
- Fig. 3: ausschnittweise und in grösserem Massstab den Regelungsbereich des axialen Abstandes zwischen den Permanentmagneten und der Bremsscheibe an der Fischerrolle gemäss Fig. 1 und
- Fig. 4: in kleinerem Massstab eine Explosivdarstellung der Fischerrolle gemäss Fig. 1.

Die Fischerrolle, insbesondere Fliegenrolle umfasst in bekannter Weise ein, mittels Adapter (nicht gezeigt) an einer Fischerrute (nicht gezeigt) befestigbares Gehäuse 1, auf dessen zentrischer Drehachse 2 eine drehbare, mit einer Handkurbel (nicht gezeigt) antreibbare Schnurspule 3 aufsitzt. An dieser Schnurspule 3 sind in deren einen Drehrichtung Freilaufmittel 4 und in deren anderen Drehrichtung bremsend wirksame Magnetmittel 5,6 wirksam.

Die Freilaufmittel 4 der hier infrage stehenden Art sind als richtungsgeschaltete Kupplungen allgemein bekannt, wobei der Schaltvorgang von der Richtung der relativen Drehbewegung zwischen An- und Abtriebsglied abhängt; in einer Richtung der Relativdrehung wird diese verhindert (Sperrzustand), in der anderen relativen Drehrichtung nicht (Freilaufzustand).

Die Freilaufmittel 4 sind hier ein Klemmfreilauf, vorzugsweise ein radialer Klemmrollenfreilauf, welcher bei geringer Baugrösse in jeder Stellung geräuschlos und mit grösster Schaltgeschwindigkeit fasst (nicht näher umschrieben, da bekannt).

Ein solcher Klemmrollenfreilauf 4 kann axial in der einen oder anderen Richtung in die Fischerrolle eingebaut sein, um diese für Rechts- oder Linkshänder verwendbar zu machen.

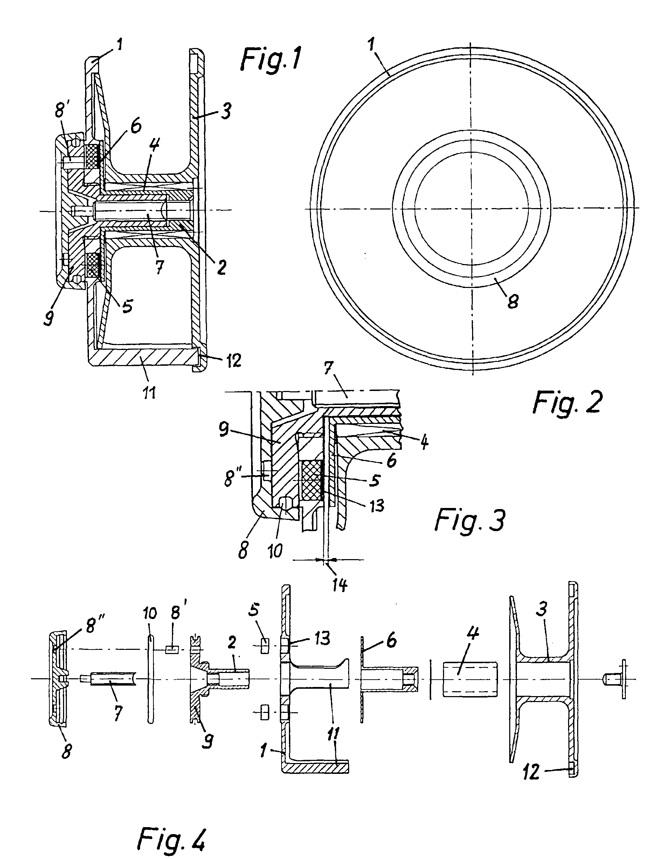

Hingegen umfassen die im Sperrzustand der Freilaufmittel 4 an der Schnurspule 3 bremsend wirksamen Magnetmittel 5,6 innenstirnseitig am Gehäuse 1 einen Magnetkranz mit einer Mehrzahl in Umfangsrichtung voneinander distanzierten Permanentmagneten 5, welche mit einer über die Freilaufmittel 4 an der Schnurspule 3 wirksamen Magnetbremsscheibe 6 zusammenwirken, wobei der axiale Abstand 14 (Fig. 3) zwischen Permanentmagnete und Bremsscheibe zur Regelung der Bremskraft verstellbar ist.

Erfindungsgemäss ist hierfür vorgesehen, dass die Bremsscheibe 6 axial über eine zur Drehachse 2 des Gehäuses 1 koaxiale Stellschraube 7 verstellbar ist, wobei an der Stellschraube 7 drehfest ein aussenstirnseitig am Gehäuse 1 angeordneter Verstelldrehgriff 8 angreift.

Ferner umgreift der Verstelldrehgriff 8 eine Aussennabe 9 am Gehäuse 1 und ist an dieser umfangsseitig über einen dichtenden und eine Bremswirkung ausübenden O-Ring 10 abgestützt und relativ zur Aussennabe 9 verdrehbar.

Weiter weist der Verstelldrehgriff 8 innenseitig eine drehbegrenzende Kulisse 8'' auf, die mit einem Anschlagstift 8' an der Aussennabe 9 am Gehäuse 1 zusammenwirkt. Die Kulisse 8'' kann dabei beispielsweise eine Winkel von 340° einschliessen, um den axialen Abstand 14 (Fig. 3) zwischen Permanentmagnete 5 und Bremsscheibe 6 zur Regelung der Bremskraft von beispielsweise 0,05 mm (maximale Bremskraft) bis 0,75 mm (minimale Bremskraft) verstellen zu können.

Um eine zusätzliche Bremskraft an der Schnurspule von Hand aufbringen zu können, ist, wie einleitend festgestellt, das Gehäuse 1 mit mindestens einem stegförmigen, zur Drehachse 2 parallelen Mantelabschnitt 11, vorzugsweise mit wenigstens zwei oder auch mehreren stegförmigen Mantelabschnitten versehen, die mit ihren freien Endabschnitten in einer inneren Ringnut 12 am Aussenflansch der Schnurspule 3 geführt sind.

Wie erwähnt, kann nun durch Fingerdruck auf die stegförmigen Mantelabschnitte auf die Schnurspule eine Bremskraft ausgeübt werden.

Weiter ist es vorteilhaft, wenn der innenstirnseitig am Gehäuse 1 angeordnete Magnetkranz mit einer Mehrzahl in Umfangsrichtung angeordnete Permanentmagnete 5 wenigstens bremsscheibenseitig schmutzdicht mit einer Abdeckung 13 versehen ist.

Auf diese Weise besteht nunmehr ein Gerät, das allen Anforderungen an eine Fischerrolle, insbesondere Fliegenrolle genügt und das darüber hinaus der Technik des Fliegenfischens entsprechend durch mechanische resp. permanentmagnetische Kraft gebremst werden kann, ohne dass Gefahr für den Benutzer bestünde. Das Gerät ist zudem sehr einfach und kompakt aufgebaut, leicht zu handhaben und schmutzunempfindlich sowie absolut störunanfällig.

## Patentansprüche

1. Fischerrolle, insbesondere Fliegenrolle, mit einem, mittels Adapter an einer Fischerrute befestigbaren Gehäuse, auf dessen zentrischer Drehachse eine drehbare, mit einer Handkurbel antreibbare Schnurspule aufsitzt, an welcher in deren einen Drehrichtung Freilaufmittel und in deren anderen Drehrichtung bremsend wirksame Magnetmittel wirksam sind, die eine magnetische Bremsscheibe an der Schnurspule umfassen mit einer dem Gehäuse zugewandten Bremsfläche, die mit einem innenstirnseitig am Gehäuse angeordneten Magnetkranz mit einer Mehrzahl in Umfangsrichtung angeordnete Permanentmagnete zusammenwirkt, wobei der axiale Abstand zwischen Permanentmagnete und Bremsscheibe zur Regelung der Bremskraft verstellbar ist,
dadurch gekennzeichnet,
dass die Bremsscheibe (6) axial über eine zur Drehachse (2) des Gehäuses (1) koaxiale Stellschraube (7) verstellbar ist, wobei an der Stellschraube (7) drehfest ein aussenstirnseitig am Gehäuse (1) angeordneter Verstelldrehgriff (8) angreift.

2. Fischerrolle nach Anspruch 1, dadurch gekennzeichnet, dass der Verstelldrehgriff (8) eine Aussennabe (9) am Gehäuse (1) umgreift und an dieser umfangsseitig über einen dichtenden und eine Bremswirkung ausübenden O-Ring (10) abgestützt und relativ zur Aussennabe (9) verdrehbar ist.

3. Fischerrolle nach Anspruch 2, dadurch gekennzeichnet, dass der Verstelldrehgriff (8) innenseitig eine drehbegrenzende Kulisse (8'') aufweist, die mit einem Anschlagstift (8') an der Aussennabe (9) am Gehäuse (1) zusammenwirkt.

4. Fischerrolle nach Anspruch 1, dadurch gekennzeichnet, dass das Gehäuse (1) mindestens einen stegförmigen, zur Drehachse (2) parallelen Mantelabschnitt (11), vorzugsweise wenigstens zwei stegförmige Mantelabschnitte umfasst, die mit ihren freien Endabschnitten in einer inneren Ringnut (12) am Aussenflansch der Schnurspule (3) geführt sind.

5. Fischerrolle nach Anspruch 1, dadurch gekennzeichnet, dass der innenstirnseitig am Gehäuse (1) angeordnete Magnetkranz mit einer Mehrzahl in Umfangsrichtung angeordnete Permanentmagnete (5) wenigstens bremsscheibenseitig schmutzdicht mit einer Abdeckung (13) versehen ist.
